# EUROPÄISCHE PATENTSCHRIFT

(11) **EP 1 411 775 B1**
(45) Veröffentlichungstag und Bekanntmachung des Hinweises auf die Patenterteilung: **12.04.2006**
(21) Anmeldenummer: 02767258.3
(22) Anmeldetag: 24.07.2002
(51) Int. Cl.: A22C 25/14

(54) **VERFAHREN ZUM ENTWEIDEN GEKÖPFTER UND UNGEKÖPFTER FISCHE UND VORRICHTUNG ZUR DURCHFÜHRUNG DESSELBEN**
METHOD FOR GUTTING BEHEADED AND NON-BEHEADED FISH AND DEVICE FOR IMPLEMENTING THE SAME
PROCEDE DE VIDAGE DE POISSONS ETETES OU NON ETETES ET DISPOSITIF DE MISE EN OEUVRE DUDIT PROCEDE

(30) Priorität: 03.08.2001 DE 10137647
(43) Veröffentlichungstag der Anmeldung: 28.04.2004
(73) Patentinhaber: NORDISCHER MASCHINENBAU RUD. BAADER GMBH + CO KG, 23560 Lübeck (DE)
(72) Erfinder: GROSSEHOLZ, Werner, 23628 Krummesse (DE); NEUMANN, Ralf, D-23628 Klempau (DE)
(74) Vertreter: Wenzel & Kalkoff
(86) Internationale Anmeldenummer: PCT/EP2002/008268
(87) Internationale Veröffentlichungsnummer: WO 2003/013263

(56) Entgegenhaltungen:
- DE-A- 19 829 376
- FR-A- 2 213 017
- US-A- 4 091 506
- US-A- 4 291 436

## Beschreibung

Die Erfindung befaßt sich mit einem Verfahren zum Entweiden geköpfter und ungeköpfter Fische, insbesondere von Zuchtfischen, umfassend die Schritte Öffnen der Bauchhöhle mittels Kreismesser mit Leitstichel, Ausschaben und Ansaugen der dann teilweise gelösten Eingeweide mittels einer Saugdüse, Öffnen der Membran der Blutniere, Ansaugen von Blut und Wasser mittels Saugschabern und Absaugen von Eingeweide und Blut und Wasser über Saugleitungen.

Des weiteren betrifft die Erfindung eine Vorrichtung, insbesondere zur Durchführung des Verfahrens, im wesentlichen umfassend einen Förderer mit mindestens einer Fischanfnahme zur Aufnahme des zu bearbeitenden Fisches und Förderung desselben in Richtung der Verarbeitungsstation, im Bereich des Förderers angeordnete Mittel zum Öffnen der Bauchhöhle, zum Ausschaben und Ansaugen der Eingeweide, zum vollständigen Öffnen der Membran der Blutniere und zum Ansaugen von Blut und Wasser sowie zum Absaugen von Eingeweide und Blut und Wasser aus der Bauchhöhle.

Ein derartiges Verfahren mit einer entsprechenden Vorrichtung zum Schlachten und Entweiden der Fische ist aus dem Dokument DE 198 29 376 bekannt. In dem bekannten Verfahren fährt ein Stichel in die Analöffnung und bildet die Schnittgegenlage für ein Kreismesser, das die Bauchdecke des Fisches in Längsrichtung öffnet. Damit das Kreismesser ungehindert aus dem Fisch austreten kann, wird der Stichel am Ende des Schnittes zurückgeschwenkt. Anschließend fährt eine erste Saugdüse mit offener Saugöffnung in die Bauchhöhle, wobei ein Kugelhahn in der Saugleitung geschlossen ist, um Unterdruck in der Saugleitung aufzubauen. Der Kugelhahn öffnet frühestens, wenn die Saugdüse den Grund der Bauchhöhle erreicht hat. Die Eingeweide werden angesaugt und am Ende der Bauchhöhle im Bereich der Seitenflossen wird die Saugdüse durch einen Schieber geschlossen, wobei die Eingeweide mit einer am Schieber angeordneten Schneide abgeschnitten werden, bevor die Saugdüse zurück schwenkt und in ihre Ausgangslage zurückkehrt. Während des sogenannten Grundlaufs der Saugdüse auf der Hauptgräte öffnet eine Klinge die Membran der Blutniere von den Banchflossen bis zum Ende der Bauchhöhle. Ein nachfolgendes zweites Werkzeug öffnet die Blutniere im hinteren Bereich (vom Anus bis zu den Bauchflossen) und entfernt in diesem Bereich Blut und Wasser. Ein weiteres nachgeschaltetes drittes Werkzeug reinigt mit einer Überdeckung zum vorherigen Werkzeug den vorderen Bereich der Bauchhöhle (von den Bauchflossen bis zum Ende der Bauchhöhle) von Blut und Wasser. Alle drei Werkzeuge sind an eine zentrale Vakuumeinrichtung, die aus einer Vakuumpumpe mit einem Filter, einem Zyklon sowie Rohrleitungen besteht, angeschlossen. Eingeweide, Blut und Wasser werden im Zyklon vom Luftstrom getrennt und über eine Exzenterschneckenpumpe oder dergleichen kontinuierlich aus diesem ansgetragen. Das bekannte Verfahren sowie die bekannte Vorrichtung weisen jedoch den Nachteil auf, daß die weitere Verwertung der Eingeweide nur eingeschränkt bzw. gar nicht möglich ist, da Eingeweide, Blut und Wasser, u.a. bedingt durch die hohe Transportgeschwindigkeit in den Rohrleitungen, den Abscheideprozeß sowie den Austrag über die Exzenterschneckenpumpe, als homogene, breiige Masse anfallen. Die bekannte Vorrichtung weist weiterhin den Nachteil auf, daß die Klinge der Saugdüse zum Öffnen der Membran der Blutniere auch die Eingeweide in Längsrichtung aufschlitzt, so daß diese beschädigt werden bzw. Blut und andere Flüssigkeiten aus der Blutniere und den Innereien austreten können, die zur Zersetzung derselben fuhren können bzw. die verwertbaren Komponenten kontaminieren.

Der Erfindung liegt damit die Aufgabe zugrunde, ein Verfahren zum Entweiden geköpfter und ungeköpfter Fische vorzuschlagen, das die weitere Verwertung der Eingeweide gewährleistet. Des weiteren ist es Aufgabe der Erfindung, eine Vorrichtung zu schaffen, die die Durchführung des erfindungsgemäßen Verfahrens auf einfache Weise ermöglicht.

Die Aufgabe der Erfindung wird durch ein Verfahren zusammen mit den eingangs genannten Schritten dadurch gelöst, daß die Eingeweide einerseits und Blut und Wasser andererseits getrennt voneinander aufgefangen werden. Dadurch ist die Vermengung sämtlicher Komponenten zu einer homogenen Masse ausgeschlossen, so daß zumindest die separat abgeführten Eingeweide einer weiteren Verwertung zugeführt werden können.

Vorteilhafterweise ist die Saugdüse während des Ansaugens der Eingeweide mit einer ersten Vakuumeinheit mit hohem Unterdruck verbunden. Dadurch wird sichergestellt, daß die Eingeweide vollständig und als Einheit aus der Bauchhöhle entnommen werden können.

Vorteilhafterweise erfolgt während der Aufwärtsbewegung der Saugdüse aus dem Fisch eine Umschaltung von der ersten Vakuumeinheit auf eine zweite Vakuumeinheit, die gegenüber der ersten Vakuumeinheit einen geringere Unterdruck aufweist, wobei ein Schieber nach dem Umschalten auf die zweite Vakuumeinheit geöffnet wird. Durch diese Schritte wird gewährleistet, daß die Eingeweide durch die erste Vakuumeinheit mit hohem Unterdruck zwar angesaugt werden, jedoch mit der zweiten Vakuumeinheit mit geringerem Unterdruck abgesogen werden. Durch die geringere Transportgeschwindigkeit in den Saugleitungen werden die Eingeweide sehr schonend und beschädigungsfrei transportiert, so daß diese später weiter verarbeitet werden können.

In einer weiteren bevorzugten Weiterbildung des Verfahrens werden die Eingeweide mit sehr geringer Geschwindigkeit in einen separaten Auffangbehälter geleitet, wobei die Eingeweide in einem flachen Winkel zur Wand des Auffangbehälters auftreffen und in diesem nach unten gleiten. Dadurch, daß ein tangentiales Auftreffen innenseitig auf die Mantelfläche des Auffangbehälters und anschließendes spiralförmiges nach unten führen in dem Anffangbehälter vermieden wird, gelangen die Eingeweide schonend auf den Behälterboden.

Bevorzugterweise sind die Saugschaber zum Abführen von Blut und Wasser mit der ersten Vakuumeinheit verbunden. Dadurch werden Blut und Wasser der ersten Vakuumeinheit, nämlich genauer dem Zyklon, zugeführt, so daß eine Vermengung mit den Eingeweiden, die zu einer Kontamination derselben führt, verhindert wird.

Vorzugsweise wird die Bauchdecke beim Öffnen der Bauchhöhle nach Eintritt in die Analöffnung nach oben, also weg von den Eingeweiden gezogen. Dadurch wird die Gefahr einer möglichen Beschädigung der Eingeweide, die eine weitere Verwertung verhindern würde, beseitigt.

Des weiteren wird die Aufgabe durch eine Vorrichtung mit den eingangs genannten Merkmalen des Oberbegriffs des Anspruchs 20 dadurch gelöst, daß die Mittel zum An- und Absaugen der Eingeweide einerseits und die Mittel zum An- und Absaugen des Blutes und des Wassers andererseits über separate Leitungen mit separaten Auffangbehältern verbunden sind. Diese Trennung einzelner Komponenten ermöglicht die weitere Verwertung

In einer bevorzugten Ausführungsform der Erfindung sind sämtliche Mittel zum An- und Absaugen der Eingeweide und von Blut und Wasser mit einer ersten Vakuumeinheit verbunden, wobei die Mittel zum An- und Absaugen der Eingeweide zusätzlich mit einer zweiten Vakuumeinheit verbunden sind. Dadurch ist die Möglichkeit gewährleistet, das Ansaugen der Eingeweide mit der ersten Vakuumeinheit, die über einen gegenüber der zweiten Vakuumeinheit höheren Unterdruck verfügt, durchzuführen, so daß die Eingeweide vollständig als Block entnommen werden können, während das Absaugen der Eingeweide mittels der zweiten Vakuumeinheit mit geringem Unterdruck in schonender Art und Weise erfolgen kann. Durch die temporäre Abtrennung der Saugdüse während des Absaugens von der zentralen Saugleitung, die zu der ersten Vakuumeinheit führt, sind die Eingeweide nur geringen Kräften ausgesetzt, so daß die Unversehrtheit der Eingeweide gewährleistet wird, ohne die Funktion des Ansaugens zu beeinträchtigen.

Vorteilhafterweise ist die Verbindung zwischen dem Mittel zum An- und Absaugen der Eingeweide , nämlich der Saugdüse und den beiden Vakuumeinheiten wahlweise schaltbar, so daß ein kontinuierlicher Prozeß aufrechterhalten werden kann, wobei jeweils der erforderliche Unterdruck in Abhängigkeit des gewünschten Verfahrensschrittes angelegt werden kann.

Der Auffangbehälter für die Eingeweide einer besonders bevorzugten Weiterbildung der Erfindung ist derart ausgebildet bzw. angeordnet, daß die Eingeweide in einem flachen Winkel auf der Mantelfläche des Auffangbehälters auftreffen, so daß die Eingeweide dann sanft auf dieser nach unten gleiten. Somit ist eine schonende Behandlung der Eingeweide auch innerhalb des Auffangbehälters sichergetsellt.

In einer weiteren vorteilhaften Ausgestaltung der erfindungsgemäßen Vorrichtung weist die Saugdüse eine Klinge zum Öffnen der Membran der Blutniere auf, die derart ausgebildet ist, daß eine Beschädigung der Eingeweide in Längsrichtung verhindert wird. Hierdurch wird auf einfache Weise verhindert, daß insbesondere eine Zersetzung der Eingeweide durch Flüssigkeiten aus den Innereien stattfindet.

Weitere bevorzugte Weiterbildungen bzw. Ausführungsformen der Erfindung ergeben sich aus den Unteransprüchen und der Beschreibung. Eine besonders bevorzugte Ausführungsform der Vorrichtung sowie das Verfahren werden anhand der beigefügten Zeichnung näher erläutert. In der Zeichnung zeigt:
- Fig. 1: eine perspektivische Darstellung von wesentlichen Teilen der Vorrichtung,
- Fig. 2: eine schematische Darstellung von Einzelheiten der Vorrichtung gemäß Figur 1, nämlich der Vakuumeinheiten,
- Fig. 3: eine Seitenansicht einer Einzelheit, nämlich Teile der Saugdüse mit Klinge in starker Vergrößerung in Bezug auf die Vorrichtung gemäß Figur 1,
- Fig. 4: eine Schnittdarstellung eines Fischkörpers mit der Klinge der Saugdüse, und
- Fig. 5: eine Draufsicht auf die Einzelheit gemäß Figur 3.

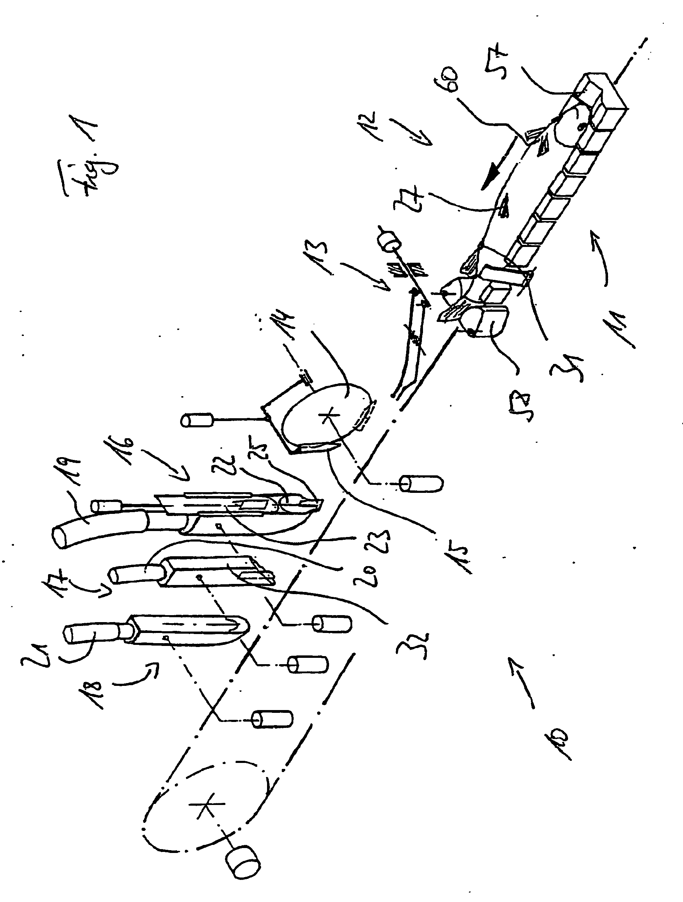

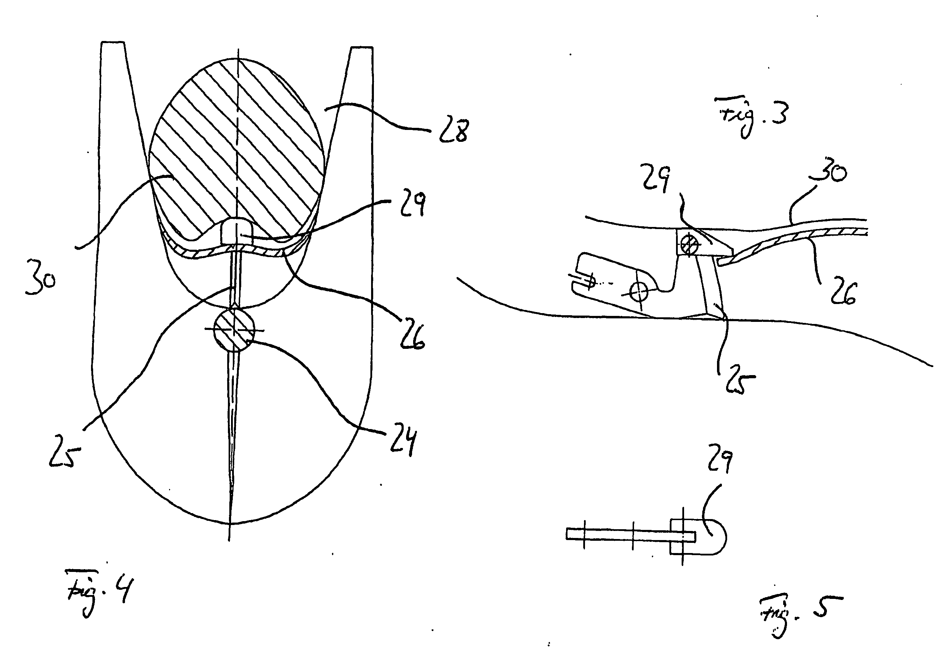

Die Vorrichtung gemäß den Figuren 1 bis 5 dient zum Entweiden geköpfter und ungeköpfter Fische, insbesondere von Zuchtfischen wie solchen der Salmo-Spezies.

Die insbesondere in Figur 1 gezeigte Vorrichtung 10 ist im wesentlichen aufgebaut, wie die bereits bekannte Vorrichtung zum Schlachten von Lachsen, so daß sich eine ausführliche Beschreibung der Vorrichtung 10 selbst erübrigt. Lediglich zum besseren Verständnis sind wesentliche Komponenten aufgeführt.

Die Vorrichtung verfügt über einen Förderer 11, mit dem die Fische Schwanz voraus und mit der Rückenflosse nach unten gefördert werden. Aber auch andere Lagen der Fische sind realisierbar. In Transportrichtung hinter der Einlaufposition 12 sind nacheinander eine Meßeinrichtung 13, ein Mittel zum Öffnen der Bauchhöhle, nämlich ein Kreismesser 14 mit Leitstichel 15, eine Saugdüse 16 sowie Saugschaber 17 und 18 angeordnet. Die Saugdüse 16 und die Saugschaber 17 und 18 sind über Saugleitungen 19, 20 und 21 mit einer Vakuumeinheit verbunden.

Die Saugdüse 16 zum Ausschaben und Ansaugen der Eingeweide weist einen Hohlkörper 22 auf, der zur Aufnahme der Eingeweide dient. Die Saugdüse 16 selbst ist mit einem guillotinenartigen Schieber 23 verschließbar. An der dem Fisch bzw. der Mittelgräte 24 zugewandten Unterseite weist die Saugdüse 16 eine Klinge 25 zum Öffnen der Membran 26 der Blutniere etwa von den Bauchflossen 27 bis zum Ende der Bauchhöhle 28 auf. Die Klinge 25 ist derart ausgebildet, daß der sogenannte Grundlauf der Saugdüse 16 mit der Klinge 25 auf der Mittelgräte 24 erfolgt. Die Klinge 25 verfügt über eine Abdeckung 29, die pflugartig zwischen Eingeweiden 30 einerseits und Membran 26 eingreift und diese voneinander trennt.

Der Saugschaber 17 zum Öffnen der Membran 26 etwa vom Anus 31 bis zu den Bauchflossen 27 ist ebenfalls als Hohlkörper 32 ausgebildet, wobei Blut und Wasser durch diesen an- und abgesogen werden. Der dem Saugschaber 17 in Transportrichtung nachfolgende Saugschaber 18 dient insbesondere zum Ausräumen, Ansaugen und Absaugen der von der Saugdüse 16 hinterlassenen Reste von Blut und Wasser.

Die Saugleitungen 19 bis 21 sind alle an eine erste Vakuumeinheit 33 angeschlossen. Die Vakuumeinheit 33 besteht im wesentlichen aus einer Vakuumpumpe 34, einem Filter 35 und einem Auffangbehälter, nämlich insbesondere einem Zyklon 36. In jeder Saugleitung 19 bis 21 ist zwischen der Saugdüse 16 bzw. den Saugschabern 17, 18 und der Vakuumeinheit 33 ein Sperrmittel, insbesondere ein Kugelhahn 37, 38 bzw. 39 angeordnet. In der Saugleitung 19, die die Saugdüse 16 mit der ersten Vakuumeinheit 33 verbindet, ist eine Abzweigung ausgebildet. Diese Abzweigung im Bereich einer Weiche 40 ist in Förderrichtung der Eingeweide 30 vor dem Kugelhahn 37 angeordnet. Die Weiche 40 führt die Saugleitung 19 der Saugdüse 16 über eine weitere Saugleitung 41 zu einer zweiten, separaten Vakuumeinheit 42. Die zweite Vakuumeinheit 42 besteht ebenfalls im wesentlichen aus einer Vakuumpumpe 43, einem Filter 44 sowie einem Auffangbehälter 45. Die Vakuumeinheit 42 weist gegenüber der Vakuumeinheit 33 einen geringeren Unterdruck auf, so daß innerhalb der Saugleitung 19 bzw. 41 zum Absaugen der Eingeweide 30 eine geringere Transportgeschwindigkeit erreicht wird. Zwischen der Weiche 40 und dem Auffangbehälter 45 ist ein weiteres Sperrmittel, insbesondere ein Kugelhahn 46 angeordnet.

Der Auffangbehälter 45 ist speziell ausgebildet, so daß die eintreffenden Eingeweide 30 in einem flachen Winkel α innenseitig auf die Mantelfläche 47 auftreffen. Der Auffangbehälter 45 selbst ist im gezeigten Ausführungsbeispiel U-förmig ausgebildet, wobei die Mantelfläche 47 umlaufend geschlossen ist. Der Auffangbehälter 45 kann jedoch auch jede andere beliebige Form aufweisen. Der mit seiner Längsachse 48 geneigt angeordnete Auffangbehälter 45 ist an den Stirnseiten 49 und 50 ebenfalls verschlossen. Im Einlaufbereich 51 ist lediglich der Zugang der-Sangleitung 42 vorgesehen. Im Auslaufbereich 52 ist der Auffangbehälter 45 durch eine schwenkbare Klappe 53, einen Schieber oder dergleichen wahlweise zu öffnen oder zu schließen. Innerhalb des Auffangbehälters 45 ist etwa mittig ein Trennmittel 54 angeordnet, mit dem der Auffangbehälter 45 teilbar ist. Das Trennmittel 54 kann an beliebiger Position angeordnet und als Klappe, Schieber oder dergleichen ausgebildet sein.

Im Auslaufbereich 52 des Auffangbehälters 45, in Fließrichtung der Eingeweide ist ein Transport- und/oder Siebband 55 angeordnet, auf dem die Eingeweide 30 abgelegt werden können. Im Einlaufbereich 51 ist ein Mittel 56 zur Erfassung des Füllstandes des Auffangbehälters 45 angeordnet. Das Mittel 56 kann als Sensor ausgebildet sein. Andere übliche optische, mechanische oder weitere berührungslose Überwachungsmittel können ebenfalls eingesetzt werden.

Die gesamte Vorrichtung 10 weist eine (nicht dargestellte) Rechnereinheit zur Steuerung und/oder Regelung auf, mittels der alle Komponenten abgestimmt aufeinander ansteuerbar sind und der Funktionsablauf frei programmiert und ausgeführt werden kann, so daß individuelle Anpassungen hinsichtlich des Verfahrensablaufes auf einfache Art und Weise durchgeführt werden können.

In einer nicht dargestellten Ausführungsform sind die Kugelhähne 37 und 46 in den Saugleitungen 19 und 42 durch einen einzigen 2/3-Wege-Hahn ersetzt. Der 2/3-Wege-Hahn ist im Bereich der Weiche 40 angeordnet und ebenfalls über die übergeordnete Steuerungs- und/oder Regeleinheit ansteuerbar.

Das Verfahren zum Entweiden geköpfter und ungeköpfter Fische, insbesondere von Zuchtfischen läuft wie folgt ab:
Die Fische werden mittels des Förderers 11 nacheinander der eigentlichen Verarbeitungsstation zum Schlachten und Entweiden zugeführt. Der in einer Aufnahme 57 gelagerte und durch Klammern 58 oder dergleichen mindestens im Schwanzbereich fixierte Fisch wird kontinuierlich durch die Verarbeitungsstation gefördert. Zunächst erreicht der Fisch die Meßeinrichtung zum Erfassen fischspezifischer Daten. Anschließend wird die Bauchhöhle 28 geöffnet. Hierzu dringt der Leitstichel 15 in die Anusöffnung ein. Die Bauchhöhle 28 wird in Längsrichtung der Bauchdecke beginnen vom Anus 31 bis zum Ende 60 der Bauchhöhle 28 im Bereich der Seitenflossen unter Lösen des Enddarmes im Bereich des Anus' 31 geöffnet. Nach Eintritt in die Analöffnung wird die Bauchdecke nach oben, also weg von den Eingeweiden 30 gezogen, so daß diese unbeschädigt bleiben.

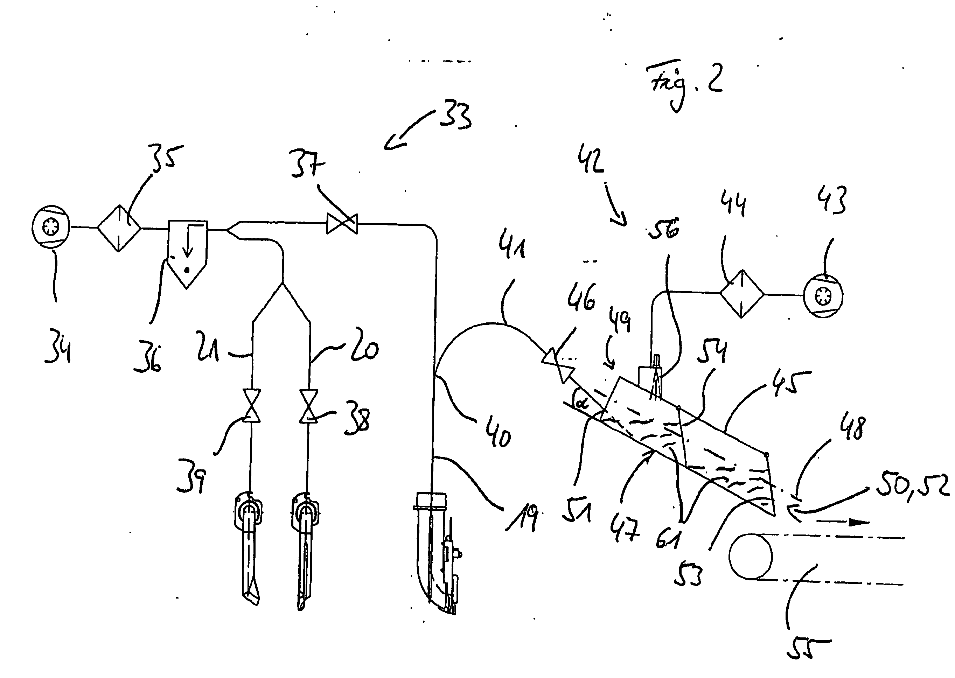

Im nächsten Verfahrensschritt senkt sich die Saugdüse 16 in geöffnetem Zustand, also mit geöffnetem Schieber 23 in die Bauchhöhle 28, und zwar etwa im Bereich der Bauchflossen 27. Der Kugelhahn 37 in der Saugleitung 19 ist zum Aufbauen eines Unterdrucks innerhalb des Zyklons 36 sowie dem Abschnitt der Saugleitung 19 zwischen dem Kugelhahn 37 und dem Zyklon 36 geschlossen. Die Saugdüse 16 wird soweit nach unten abgesenkt, daß die Saugdüse 16 mit ihrer Klinge 25 auf der Mittelgräte 24 aufsetzt. Die Eingeweide 30 werden nun durch die überlagerte Transportgeschwindigkeit gelöst, zusammengeschoben und in dem Hohlkörper 22 der Saugdüse 16 gesammelt. Der Kugelhahn 37 wird möglichst spät, also erst kurz vor dem Ende 60 der Bauchhöhle 28 geöffnet, so daß eine große Sogwirkung (bedingt durch den hohen Unterdruck im Zyklon 36 sowie dem Abschnitt der Saugleitung 19 zwischen dem Kugelhahn 37 und dem Zyklon 36) innerhalb der gesamten Saugleitung 19 entsteht. Beim Einfädeln der Saugdüse 16 in die Bauchhöhle 28 bzw. beim Aufsetzen der Klinge 25 auf die Mittelgräte 24 wird die Membran 26 durch die sichelförmige Klinge 25 durchtrennt bzw. durchstochen. Die Sichelform der Klinge 25 bewirkt, daß die Membran 26 nach oben rutscht, allerdings nur bis unter die Abdeckung 29 (Zustand siehe Figur 3). Die Abdeckung 29 schiebt sich zwischen die Eingeweide 30 und die Membran 26 (siehe insbesondere Figuren 3 und 4). Dadurch wird gewährleistet, daß die Klinge 25 zwar die Membran 26 von den Brustflossen 27 bis zum Ende 60 der Bauchhöhle 28 aufschlitzt, die Eingeweide 30 jedoch unbeschädigt läßt, da die Abdeckung 29 die Eingeweide 30 nach oben, weg von der Klinge 25 drückt und in die Saugöffnung der Saugdüse 16 führt und gleichzeitig die Membran 26 der Klinge 25 zum Aufschlitzen zuführt. Am Ende 60 der Bauchhöhle 28 befinden sich die Eingeweide 30 vollständig innerhalb des Hohlkörpers 22 der Saugdüse 16. Der Schieber 23 wird geschlossen und trennt dabei mit seiner Schneide die Eingeweide 30 insgesamt vom Fischrumpf.

Während der Aufwärtsbewegung der Saugdüse 16 aus der Bauchhöhle wird die Verbindung der Saugdüse 16 mit der ersten Vakuumeinheit 33 getrennt und die Saugdüse 16 wird mit der zweiten Vakuumeinheit 42 verbunden. Diese Umschaltung erfolgt, indem der Kugelhahn 37 geschlossen und der Kugelhahn 46, der zuvor wegen Aufbau von Vakuum im Auffangbehälter und der Saugleitung 41 geschlossen war, geöffnet wird. Nach dem Öffnen des Kugelhahns 46 wird der Schieber 23 geöffnet, so daß die Eingeweide 30, nun mit einer wegen des geringeren Unterdrucks der zweiten Vakuumeinheit 42 geringeren Transportgeschwindigkeit in den Auffangbehälter 45 geleitet werden.

Unmittelbar, nachdem die Eingeweide 30 eines Fisches den Kugelhahn 46 passiert haben, kann dieser wieder geschlossen werden. Der Kugelhahn 37 kann nun für den nächsten Ansaugvorgang zum Ansaugen der Eingeweide 30 eines nachfolgenden Fisches wieder geöffnet werden, so daß der Zyklus der Saugdüse 16 von neuem beginnen kann.

Die mit einer sehr geringen Geschwindigkeit in den Auffangbehälter 45 geleiteten Eingeweide 30 treffen in einem flachen Winkel α (siehe insbesondere Figur 2) auf der Mantelfläche 47 auf und gleiten in Richtung der Bodenklappe. Allerdings gleiten die Eingeweide 30 zunächst gegen ein Trennmittel 54, das die Eingeweide 30 mehrerer Fische zur Bildung einer Füllmenge 61 aufstaut. Das Mittel 56 zur Überwachung des Füllstandes bzw. der Füllmenge 61 signalisiert, wenn die vordere Kammer gefüllt ist. Spätestens dann muß die Bodenklappe 53 geschlossen werden, so daß das Trennmittel 54 unter Aufrechterhaltung des Unterdrucks in dem Auffangbehälter 45 geöffnet werden kann. Die Eingeweide 30 rutschen dann in die untere Kammer und werden durch die Bodenklappe 53 aufgehalten. Nach dem Schließen des Trennmittels 54 kann dann die Bodenklappe 53 zum Abführen der Eingeweide 30 auf das Transport- und/oder Siebband 55 geöffnet werden. Vorzugsweise ist das Trennmittel 54 solange geschlossen, bis die obere Kammer gefüllt ist. Erst wenn keine Eingeweide 30 mehr anfgenommen werden können, öffnet das Trennmittel 54, damit die Eingeweide 30 in die untere Kammer, die gegenüber der oberen Kammer mindestens das gleiche Volumen aufweisen sollte, gleiten können. Sobald alle Eingeweide 30 in der unteren Kammer angelangt sind, wird das Trennmittel 54 geschlossen. Durch diese Schleusenfunktion wird mit Hilfe einer SPS oder einer Rechnereinheit ein kontinuierlicher Betrieb der Vorrichtung ermöglicht.

Nach dem Ausschaben und Ansaugen der Eingeweide 30, bei dem die Membran 26 teilweise mit geöffnet wird, öffnet der Saugschaber 17 die Membran 26 vollständig und saugt zusammen mit dem Saugschaber 18 das angesammelte Blut und Wasser an. Über die Saugleitungen 20 und 21 werden das Blut und Wasser bei geöffneten Kugelhähnen 38, 39 in den Zyklon 36 gesogen. Der Unterdruck zum Ansaugen bzw. Absaugen von Blut und Wasser wurde zuvor durch die geschlossenen Kugelhähne 38, 39 in dem Zyklon 36 sowie den Abschnitten der Saugleitungen 20, 21 zwischen den Kugelhähnen 38, 39 und dem Zyklon 36 erzeugt. Blut und Wasser treffen tangential in dem Zyklon 36 ein und fallen dann insbesondere anfgrund der reduzierten Luftgeschwindigkeit in dem Zyklon 36 nach unten.

Das gesamte Verfahren, insbesondere die Steuerung und Regelung aller Komponenten, wie z.B. Fahrkurven der Saugdüse 16 und der Saugschaber 17, 18, Schaltpunkte der Kugelhähne 37, 38, 39, 46, der Bodenklappe 53 sowie des Trennmittels 54 und der Verarbeitungsmaschine selbst erfolgt automatisiert über eine frei programmierbare Rechnereinheit.

Der Unterdruck der ersten Vakuumeinheit 33, der gegenüber dem Unterdruck in der zweiten Vakuumeinheit 42 deutlich größer ist, bewirkt, daß die Transportgeschwindigkeiten in den Saugleitungen, die mit der ersten Vakuumeinheit 33 verbunden sind, um den Faktor 10 bis 15 höher liegen als in den Saugleitungen, die mit der zweiten Vakuumeinheit 42 verbunden sind. Dies ist ein wesentlicher Grund, warum die Eingeweide 30 bei dem erfindungsgemäßen Verfahren unversehrt gewonnen werden können.

## Patentansprüche

1. Verfahren zum Entweiden geköpfter und ungeköpfter Fische, insbesondere von Zuchtfischen, umfassend die Schdtte:
- Öffnen der Bauchhöhle (28) mittels Kreismesser (14) mit Leitstichel (15),
- Ausschaben und Ansaugen der dann teilweise gelösten Eingeweide (30) mittels einer Saugdüse (16),
- Öffnen der Membran (26) der Blutniere und Ansaugen von Blut und Wasser mittels Sangschabern (17, 18),
- Absaugen von Eingeweide (30) und Blut und Wasser über Saugleitungen (19,20,21),
**dadurch gekennzeichnet, daß** die Eingeweide (30) einerseits und Blut und Wasser andererseits getrennt voneinander aufgefangen werden.

2. Verfahren nach Anspruch 1, **dadurch gekennzeichnet, daß** das Öffnen der Bauchhöhle (28) in Längsrichtung der Bauchdecke beginnend vom Anus (31) bis zum Ende (60) der Bauchhöhle (28) im Bereich der Seitenftossen unter Lösen des Enddarms im Bereich des Anus' (31) erfolgt.

3. Verfahren nach Anspruch 1 oder 2, **dadurch gekennzeichnet, daß** das Ausschaben und Ansaugen der Eingeweide (30) entlang der Mittelgräte (24) des Fisches erfolgt, wobei gleichzeitig die teilweise gelösten Eingeweide (30) angesaugt werden, und die Membran (26) der Blutniere mittels einer im Bereich der Saugdüse (16) angeordneten Klinge (25) teilweise geöffnet wird.

4. Verfahren nach einem der Ansprüche 1 bis 3, **dadurch gekennzeichnet, daß** die Saugdüse (16) während des Ansaugens der Eingeweide (30) mit einer ersten Vakuumeinheit (33) mit hohem Unterdruck verbunden ist.

5. Verfahren nach Anspruch 4, **dadurch gekennzeichnet, daß** das Vakuum durch Schließen eines Kugelhahns (37) oder dergleichen in der Vakuumeinheit (33), insbesondere in einem Zyklon (36) und dem Abschnitt der Saugleitung (19) zwischen einem Kugelhahn (37) und dem Zyklon (36) aufgebaut wird.

6. Verfahren nach einem der Ansprüche 1 bis 5, **dadurch gekennzeichnet, daß** die Saugdüse (16) am Ende der Bauchhöhle (28) durch einen mit einer Schneide versehenen Schieber (23) verschlossen wird, so daß die vollständig vom Fischrumpf abgetrennten Eingeweide (30) in der Saugdüse (16) lagern.

7. Verfahren nach einem der Ansprüche 1 bis 6, **dadurch gekennzeichnet, daß** während der Aufwärtsbewegung der Saugdüse (16) aus dem Fisch eine Umschaltung von der ersten Vakuumeinheit (33) auf eine zweite Vakuumeinheit (42), die gegenüber der ersten Vakuumeinheit (33) einen geringeren Unterdruck autweist, erfolgt, wobei der Schieber (23) nach dem Umschalten auf die zweite Vakuumeinheit (42) geöffnet wird.

8. Verfahren nach einem der Ansprüche 1 bis 7, **dadurch** gekenazeichnet, daß die Eingeweide (30) mit sehr geringer Geschwindigkeit in einen separaten, von dem Zyklon (36) zur Aufnahme von Blut und Wasser getrennten Auffangbehälter (45) geleitet werden.

9. Verfahren nach einem der Ansprüche 1 bis 8, **dadurch gekennzeichnet, daß** die Eingeweide (30) in einem flachen Winkel α zur Mantelfläche (47) des Auffangbehälters (45) auftreffen und auf dieser nach unten in Richtung einer Bodenklappe (53) gleiten.

10. Verfahren nach einem der Ansprüche 1 bis 9, **dadurch gekennzeichnet, daß** der Füllstand des Auffangbehälters (45) überwacht wird.

11. Verfahren nach einem der Ansprüche 1 bis 10, **dadurch gekennzeichnet, daß** bei gefülltem Auffangbehälter (45) vor dem Öffnen der Bodenklappe (53) zum mindestens teilweise Ablegen der Eingeweide (30) auf ein Transport- und/oder Siebband (55) innerhalb des Auffangbehälters (45) eine Trennmittel (54) geschlossen wird, so daß der Unterdruck innerhalb des Auffangbehälters (45) aufrechterhalten wird.

12. Verfahren nach einem der vorhergehenden Ansprüche 1 bis 11, **dadurch gekennzeichnet, daß** die Saugdüse (16) nach dem Absaugen der Eingeweide (30) durch erneutes Umschalten wieder mit der ersten Vakuumeinheit (33) verbunden wird, so daß die Eingeweide (30) eines nachfolgenden Fisches angesogen werden können.

13. Verfahren nach Anspruch 12, **dadurch gekennzeichnet, daß** vor dem Ansaugen der Eingeweide (30) wiederum Vakuum in der Vakuumeinheit (33) durch Schließen des Kugelhahns (37) aufgebaut wird.

14. Verfahren nach einem der Ansprüche 1 bis 13, **dadurch gekennzeichnet, daß** die Membran (26) der Bluthiere vollständig von dem Saugschaber (17) geöffnet wird.

15. Verfahren nach einem der Ansprüche 1 bis 14, **dadurch gekennzeichnet, daß** die Saugschaber (17, 18) zum Abführen von Blut und Wasser mit der ersten Vakuumeinheit (33) verbunden sind.

16. Verfahren nach einem der Ansprüche 1 bis 15, **dadurch gekennzeichnet, daß** in den Saugleitungen (20, 21) zwischen den Sangschabern (17, 18) und der ersten Vakuumeinheit (33) Vakuum durch Schließen von Kugelhähnen (38, 39) oder dergleichen aufgebaut wird.

17. Verfahren nach einem der Anspräche 1 bis 16, **dadurch gekennzeichnet, daß** Blut und Wasser in den Zyklon (36) geleitet werden, wobei Blut und Wasser tangential in dem Zyklon (36) eintreffen.

18. Verfahren nach einem der Ansprüche 1 bis 19, **dadurch gekennzeichnet, daß** die Bauchdecke beim Öffnen der Bauchhöhle (28) nach Eintritt in die Analöffnung nach oben, also weg von den Eingeweiden (30), gezogen wird.

19. Verfahren nach einem der Ansprüche 1 bis 18, **dadurch gekennzeichnet, daß** die Eingeweide (30) bei der Schnittführung der Klinge (25) zum Öffnen der Membran (26) der Blutniere mittels der Klinge (25) der Saugdüse (16) unversehrt bleiben.

20. Vorrichtung, insbesondere zur Durchführung des Verfahrens gemäß den Ansprüchen 1 bis 19, im wesentlichen umfassend einen Förderer (11) mit mindestens einer Fischaufnahme (57) zur Aufnahme des zu bearbeitenden Fisches und Förderung desselben in Richtung der Verarbeitungsstation, im Bereich des Förderers (11) angeordnete Mittel (14, 15, 16, 17, 18) zum Öffnen der Bauchhöhle (28), zum Ansschaben und Ansaugen der Eingeweide (30), zum vollständigen Öffnen der Membran (26) der Blutniere und zum Ansaugen von Blut und Wasser sowie zum Absaugen von Eingeweide (30) und Blut und Wasser aus der Bauchhöhle (28), **dadurch gekennzeichnet, daß** die Mittel (16) zum An- und Absaugen der Eingeweide (30) einerseits und die Mittel (17, 18) zum An- und Absaugen des Blutes und des Wassers andererseits über separate Sangleitungen (19, 20, 21; 41) mit separaten Auffangbehältern (36, 45) verbunden sind.

21. Vorrichtung nach Anspruch 20, **dadurch kennzeichnet, daß** sämtliche Mittel (16, 17, 18) zum An- und Absaugen der Eingeweide (30) und von Blut und Wasser mit einer ersten Vakuumeinheit (33) verbunden sind.

22. Vorrichtung nach Anspruch 21, **dadurch gekennzeichnet, daß** die erste Vakuumeinheit (33) im wesentlichen aus einer Vakuumpumpe (34) mit Filter (35), einem Zyklon (36) als Auffangbehälter sowie Saugleitungen (19,20,21) besteht.

23. Vorrichtung nach einem der Ansprüche 20 bis 22 **dadurch gekennzeichnet, daß** das Mittel (16) zum An- und Absaugen der Eingeweide (30) zusätzlich mit einer zweiten Vakunmeinheit (42) verbunden ist.

24. Vorrichtung nach Anspruch 23, **dadurch gekennzeichnet, daß** die zweite Vakaumeinheit (42) im wesentlichen aus einer Vakuumpumpe (43) mit Filter (44), einem Auffangbehälter (45) sowie Sangleitungen (41) besteht.

25. Vorrichtung nach einem der Ansprüche 20 bis 24, **dadurch gekennzeichnet, daß** die zweite Vakuumeinheit (42) gegenüber der ersten Vakuumeinheit (33) einen geringeren Unterdruck aufweist.

26. Vorrichtung nach einem der Ansprüche 20 bis 25, **dadurch gekennzeichnet, daß** die Verbindung zwischen dem Mittel zum An- und Absaugen der Eingeweide, nämlich der Saugdüse (16) und den beiden Vakuumeinheiten (33, 42) wahlweise schaltbar ist.

27. Vorrichtung nach einem der Ansprüche 20 bis 26, **dadurch gekennzeichnet, daß** die Saugleitungen (19, 41) zwischen der Saugdüse (16) und der ersten Vakuumeinheit (33) einerseits und zwischen der Saugdüse (16) und der zweiten Vakuumeinheit (42) andererseits im Bereich einer Weiche (40) miteinander verbunden sind.

28. Vorrichtung nach einem der Ansprüche 20 bis 27, **dadurch gekennzeichnet, daß** zur Umschaltung zwischen den Vakuumeinheiten (33, 42) in den Saugleitungen (19, 41) jeweils ein Kugelhahn (37,46) oder dergleichen angeordnet ist.

29. Vorrichtung nach einem der Ansprüche 20 bis 27, **dadurch gekennzeichnet, daß** zur Umschaltung zwischen den Vakuumeinheiten (33, 42) im Bereich der Weiche (40) der Sangleitungen (19, 41) ein 2/3-Wege-Hahn angeordnet ist.

30. Vorrichtung nach einem der Ansprüche 20 bis 29, **dadurch gekennzeichnet, daß** in den Saugleitungen (20, 2 1) zwischen den Mitteln (17, 18) zum An- und Absaugen von Blut und Wasser, nämlich den Saugschabern und der ersten Vakuumeinheit (33) jeweils ein Kugelhahn (38, 39) oder dergleichen angeordnet ist.

31. Vorrichtung nach einem der Ansprüche 20 bis 30, **dadurch gekennzeichnet, daß** der Auffangbehälter (45) für die Eingeweide (30) derart ausgebildet bzw. angeordnet ist, daß die Eingeweide (30) in einem flachen Winkel α an der Mantelfläche (47) des Auffangbehälters (45) auftreffen, so daß die Eingeweide (30) dann sanft auf dieser nach unten gleiten.

32. Vorrichtung nach einem der Ansprüche 20 bis 31, **dadurch gekennzeichnet, daß** innerhalb des Auffangbehälters (45) ein Trennmittel (54) anordnet ist, das wahlweise geöffnet oder geschlossen werden kann.

33. Vorrichtung nach einem der Ansprüche 20 bis 32, **dadurch gekennzeichnet, daß** im Bereich des Auffangbehälters (45) Mittel (56) zur Erfassung des Füllstandes des Auffangbehälters (45) angeordnet sind.

34. Vorrichtung nach einem der Ansprüche 20 bis 33, **dadurch gekennzeichnet, daß** in Fließrichtung der Eingeweide (30) hinter dem Auffangbehälter (45) ein Transport- und/oder Siebband (55) angeordnet ist.

35. Vorrichtung nach einem der Ansprüche 20 bis 34, **dadurch gekennzeichnet, daß** die Vorrichtung (10) über eine Steuerung verfügt, mittels der jede einzelne Komponente steuerbar und/oder regelbar ist.

36. Vorrichtung nach einem der Ansprüche 20 bis 35, **dadurch gekennzeichnet, daß** die Saugdüse (16) eine Klinge (25) zum Öffnen der Membran (26) der Blutniere aufweist, die derart ausgebildet ist, daß eine Beschädigung der Eingeweide (30) in Längsrichtung verhindert wird.

37. Vorrichtung nach Anspruch 36, **dadurch gekennzeichnet, daß** die Klinge (25) mit einer Abdeckung (29) versehen ist.

## Claims

1. Method for gutting decapitated and undecapitated fish, in particular farmed fish, including the steps of:
- opening the abdominal cavity (28) with a circular blade (14) with guide gouge (15),
- scraping out and aspirating the entrails (30) which are then partially detached with a suction nozzle (16),
- opening the membrane (26) of the blood kidney and aspirating blood and water with suction scrapers (17, 18),
- extracting entrails (30) and blood and water via suction pipes (19, 20, 21),
**characterised in that** the entrails (30) on the one hand and blood and water on the other hand are collected separately from each other.

2. Method according to claim 1, **characterised in that** opening of the abdominal cavity (28) takes place in the longitudinal direction of the abdominal wall, beginning from the anus (31) to the end (60) of the abdominal cavity (28) in the region of the lateral fins, detaching the hind gut in the region of the anus (31).

3. Method according to claim 1 or 2, **characterised in that** scraping out and aspiration of the entrails (30) take place along the centre bone (24) of the fish, wherein at the same time the partially detached entrails (30) are aspirated, and the membrane (26) of the blood kidney is partially opened by means of a blade (25) arranged in the region of the suction nozzle (16).

4. Method according to any of claims 1 to 3, **characterised in that** the suction nozzle (16) is connected to a first vacuum unit (33) with high underpressure during aspiration of the entrails (30).

5. Method according to claim 4, **characterised in that** the vacuum is built up by closing a ball valve (37) or the like in the vacuum unit (33), in particular in a cyclone (36), and in the section of the suction pipe (19) between a ball valve (37) and the cyclone (36).

6. Method according to any of claims 1 to 5, **characterised in that** the suction nozzle (16) is closed at the end of the abdominal cavity (28) by a slide valve (23) provided with a cutting edge, so that the entrails (30) fully separated from the fish's body lie in the suction nozzle (16).

7. Method according to any of claims 1 to 6, **characterised in that** during the upward movement of the suction nozzle (16) out of the fish there is a switch from the first vacuum unit (33) to a second vacuum unit (42) which has a lower underpressure than the first vacuum unit (33), the slide valve (23) being opened after switching to the second vacuum unit (42).

8. Method according to any of claims 1 to 7, **characterised in that** the entrails (30) are guided at a very low speed into a separate collecting receptacle (45) separated from the cyclone (36) for receiving blood and water.

9. Method according to any of claims 1 to 8, **characterised in that** the entrails (30) impinge at a low angle α to the peripheral surface (47) of the collecting receptacle (45) and slide down over it in the direction of a bottom flap (53).

10. Method according to any of claims 1 to 9, **characterised in that** the level of the collecting receptacle (45) is monitored.

11. Method according to any of claims 1 to 10, **characterised in that**, when the collecting receptacle (45) is full, before opening the bottom flap (53) for at least partially depositing the entrails (30) on a conveyor belt and/or screen belt (55), inside the collecting receptacle (45) a dividing means (54) is closed so that the underpressure within the collecting receptacle (45) is maintained.

12. Method according to any of the preceding claims 1 to 11, **characterised in that**, after extraction of the entrails (30), the suction nozzle (16) is connected to the first vacuum unit (33) again by switching again, so that the entrails (30) of a subsequent fish can be aspirated.

13. Method according to claim 12, **characterised in that**, before aspiration of the entrails (30), a vacuum is again built up in the vacuum unit (33) by closing the ball valve (37).

14. Method according to any of claims 1 to 13, **characterised in that** the membrane (26) of the blood kidney is fully opened by the suction scraper (17).

15. Method according to any of claims 1 to 14, **characterised in that** the suction scrapers (17, 18) are connected to the first vacuum unit (33) for removing blood and water.

16. Method according to any of claims 1 to 15, **characterised in that** in the suction pipes (20, 21) between the suction scrapers (17, 18) and the first vacuum unit (33) a vacuum is built up by closing ball valves (38, 39) or the like.

17. Method according to any of claims 1 to 16, **characterised in that** blood and water are conducted into the cyclone (36), wherein blood and water enter the cyclone (36) tangentially.

18. Method according to any of claims 1 to 19, **characterised in that**, upon opening of the abdominal cavity (28) after entry into the anal opening, the abdominal wall is pulled upwards, that is, away from the entrails (30).

19. Method according to any of claims 1 to 18, **characterised in that**, during the cut of the blade (25) for opening the membrane (26) of the blood kidney by means of the blade (25) of the suction nozzle (16), the entrails (30) remain intact.

20. Apparatus, in particular for carrying out the method according to claims 1 to 19, essentially including a conveyor (11) with at least one fish receptacle (57) for receiving the fish to be processed and conveying it in the direction of the processing station, means (14, 15, 16, 17, 18) arranged in the region of the conveyor (11) for opening the abdominal cavity (28), for scraping out and aspirating the entrails (30), for completely opening the membrane (26) of the blood kidney and for aspirating blood and water as well as for extracting entrails (30) and blood and water from the abdominal cavity (28), **characterised in that** the means (16) for aspirating and extracting the entrails (30) on the one hand and the means (17, 18) for aspirating and extracting the blood and water on the other hand are connected by separate suction pipes (19, 20, 21; 41) to separate collecting receptacles (36, 45).

21. Apparatus according to claim 20, **characterised in that** all the means (16, 17, 18) for aspirating and extracting the entrails (30) and blood and water are connected to a first vacuum unit (33).

22. Apparatus according to claim 21, **characterised in that** the first vacuum unit (33) essentially consists of a vacuum pump (34) with filter (35), a cyclone (36) as the collecting receptacle and suction pipes (19, 20, 21).

23. Apparatus according to any of claims 20 to 22, **characterised in that** the means (16) for aspirating and extracting the entrails (30) is additionally connected to a second vacuum unit (42).

24. Apparatus according to claim 23, **characterised in that** the second vacuum unit (42) essentially consists of a vacuum pump (43) with filter (44), a collecting receptacle (45) and suction pipes (41).

25. Apparatus according to any of claims 20 to 24, **characterised in that** the second vacuum unit (42) has a lower underpressure than the first vacuum unit (33).

26. Apparatus according to any of claims 20 to 25, **characterised in that** the connection can be switched at option between the means for aspirating and extracting the entrails, namely the suction nozzle (16), and the two vacuum units (33, 42).

27. Apparatus according to any of claims 20 to 26, **characterised in that** the suction pipes (19, 41) between the suction nozzle (16) and the first vacuum unit (33) on the one hand and between the suction nozzle (16) and the second vacuum unit (42) on the other hand are connected to each other in the region of a switch (40).

28. Apparatus according to any of claims 20 to 27, **characterised in that**, for switching between the vacuum units (33, 42), in each of the suction pipes (19,41) is arranged a ball valve (37, 46) or the like.

29. Apparatus according to any of claims 20 to 27, **characterised in that**, for switching between the vacuum units (33, 42), in the region of the switch (40) of the suction pipes (19, 41) is arranged a 2/3-way valve.

30. Apparatus according to any of claims 20 to 29, **characterised in that** in the suction pipes (20, 21) between the means (17, 18) for aspirating and extracting blood and water, namely the suction scrapers, and the first vacuum unit (33), in each case is arranged a ball valve (38, 39) or the like.

31. Apparatus according to any of claims 20 to 30, **characterised in that** the collecting receptacle (45) for the entrails (30) is constructed or arranged in such a way that the entrails (30) impinge at a low angle α on the peripheral surface (47) of the collecting receptacle (45), so that the entrails (30) then slide down over it smoothly.

32. Apparatus according to any of claims 20 to 31, **characterised in that** within the collecting receptacle (45) is arranged a dividing means (54) which can be optionally opened or closed.

33. Apparatus according to any of claims 20 to 32, **characterised in that** in the region of the collecting receptacle (45) are arranged means (56) for detecting the level of the collecting receptacle (45).

34. Apparatus according to any of claims 20 to 33, **characterised in that** behind the collecting receptacle (45) in the direction of flow of the entrails (30) is arranged a conveyor belt and/or screen belt (55).

35. Apparatus according to any of claims 20 to 34, **characterised in that** the apparatus (10) has a control system with which each individual component can be controlled and/or regulated.

36. Apparatus according to any of claims 20 to 35, **characterised in that** the suction nozzle (16) has a blade (25) for opening the membrane (26) of the blood kidney, which is constructed so as to prevent damage to the entrails (30) in the longitudinal direction.

37. Apparatus according to claim 36, **characterised in that** the blade (25) is provided with a cover (29).

## Revendications

1. Procédé d'éviscération de poissons étêtés ou non étêtés, en particulier de poissons d'élevage, lequel procédé comporte les étapes consistant à :
- ouvrir la cavité abdominale (28) au moyen de couteaux circulaires (14) dotés de lames directrices (15),
- gratter et aspirer les viscères (30) alors partiellement détachées au moyen d'une buse d'aspiration (16),
- ouvrir la membrane (26) du rein et aspirer le sang et l'eau au moyen de grattoirs aspirateurs (17, 18),
- évacuer par aspiration les viscères (30), le sang et l'eau par des conduites d'aspiration (19, 20, 21),
**caractérisé en ce que** les viscères (30) d'une part et le sang et l'eau d'autre part sont collectés séparément.

2. Procédé selon la revendication 1, **caractérisé en ce que** l'ouverture de la cavité abdominale (28) est effectuée longitudinalement à la paroi abdominale de la cavité abdominale (28) de l'anus (31) au gros intestin (60) dans la région des ailerons latéraux en détachant le gros intestin au niveau de l'anus (31).

3. Procédé selon la revendication 1 ou 2, **caractérisé en ce que** le grattage et l'aspiration des viscères (30) sont effectués le long l'arête centrale (24) du poisson, les viscères partiellement détachées (30) étant aspirées simultanément, et la membrane (26) du rein étant partiellement ouverte au moyen d'une lame (25) disposée dans la région de la buse d'aspiration (16).

4. Procédé selon l'une des revendications 1 à 3, **caractérisé en ce que** la buse d'aspiration (16) est reliée à une première unité de dépression (33), générant une dépression élevée, pendant l'aspiration des viscères (30).

5. Procédé selon la revendication 4, **caractérisé en ce que** la dépression est générée en fermant un robinet à obturateur sphérique (37) ou analogue dans l'unité de dépression (33), en particulier dans un cyclone (36) et la portion de la conduite d'aspiration (19) entre un robinet à obturateur sphérique (37) et le cyclone (36).

6. Procédé selon l'une des revendications 1 à 5, **caractérisé en ce que** la buse d'aspiration (16), à l'extrémité de la cavité abdominale (28), est fermée par une vanne d'arrêt (23) dotée d'un couteau de sorte que les viscères (30), totalement séparées du corps du poisson, sont logées dans la buse d'aspiration (16).

7. Procédé selon l'une des revendications 1 à 6, **caractérisé en ce que**, pendant la montée de la buse d'aspiration (16) pour sortir du poisson, il est effectué une commutation de la première unité de dépression (33) à une deuxième unité de dépression (42), qui est générée une dépression inférieure à celle de la première unité de dépression (33), la vanne d'arrêt (23) étant ouverte après la commutation sur la deuxième unité de dépression (42).

8. Procédé selon l'une des revendications 1 à 7, **caractérisé en ce que** les viscères (30) sont amenées à très faible vitesse dans un récipient de collecte (45) séparé du cyclone (36) afin de recevoir le sang et l'eau.

9. Procédé selon l'une des revendications 1 à 8, **caractérisé en ce que** les viscères (30) rencontrent la surface d'enveloppe (47) du récipient de collecte (45) avec un dièdre α et glisse vers le bas sur cette surface d'enveloppe en direction d'une trappe de fond (53).

10. Procédé selon l'une des revendications 1 à 9, **caractérisé en ce que** l'état de remplissage du récipient de collecte (45) est surveillé.

11. Procédé selon l'une des revendications 1 à 10, **caractérisé en ce que**, lorsque le récipient de collecte (45) est rempli, un moyen de séparation (54) est fermé avant l'ouverture de la trappe de fond (53) destinée à déposer au moins partiellement les viscères (30) sur une bande de transport et/ou de tamisage (55) à l'intérieur du récipient de collecte (45) de façon à maintenir la dépression à l'intérieur du récipient de collecte (45).

12. Procédé selon l'une des revendications précédentes 1 à 11, **caractérisé en ce que** la buse d'aspiration (16) est de nouveau raccordée à la première unité de dépression (33) après l'aspiration des viscères (30) en effectuant une nouvelle commutation de façon à pouvoir aspirer les viscères (30) d'un poisson suivant.

13. Procédé selon la revendication 12, **caractérisé en ce qu'**une dépression est de nouveau générée par l'unité de dépression (33) en fermant le robinet à obturateur sphérique (37) avant l'aspiration des viscères (30).

14. Procédé selon l'une des revendications 1 à 13, **caractérisé en ce que** la membrane (26) du rein est totalement ouverte par le grattoir aspirateur (17).

15. Procédé selon l'une des revendications 1 à 14, **caractérisé en ce que** le grattoir aspirateur (17, 18) est raccordé à la première unité de dépression (33) afin d'évacuer le sang et l'eau.

16. Procédé selon l'une des revendications 1 à 15, **caractérisé en ce qu'**une dépression est générée dans les conduites d'aspiration (20, 21) entre les grattoirs aspirateurs (17, 18) et la première unité de dépression (33) en fermant les robinets à obturateur sphérique (38, 39) ou analogues.

17. Procédé selon l'une des revendications 1 à 16, **caractérisé en ce que** le sang et l'eau sont amenés dans le cyclone (36), le sang et l'eau arrivant tangentiellement dans le cyclone (36).

18. Procédé selon l'une des revendications 1 à 19, **caractérisé en ce que** la paroi abdominale est tirée vers le haut, donc en s'écartant des viscères (30), lors de l'ouverture de la cavité abdominale (28) après l'entrée dans l'ouverture anale.

19. Procédé selon l'une des revendications 1 à 18, **caractérisé en ce que**, lors du passage de la lame de coupe (25) afin d'ouvrir la membrane (26) du rein, les viscères (30) ne sont pas touchées par la lame (25) de la buse d'aspiration (16).

20. Dispositif, destiné en particulier à mettre en oeuvre le procédé selon les revendications 1 à 19, ledit dispositif comportant essentiellement un transporteur (11) doté d'au moins un logement de poisson (57) destiné à recevoir le poisson à traiter et à transporter celui-ci en direction de la station de traitement, des moyens (14, 15, 16, 17, 18) disposés dans la région du transporteur (11) et destinés à ouvrir la cavité abdominale (28), à gratter et aspirer les viscères (30), à ouvrir totalement la membrane (26) du rein et à aspirer le sang et l'eau ainsi qu'à évacuer par aspiration les viscères (30), le sang et l'eau de la cavité abdominale (28), **caractérisé en ce que** les moyens (16) destinés à aspirer et évacuer par aspiration les viscères (30) d'une part et les moyens (17, 18) destinés à aspirer et évacuer par aspiration le sang et l'eau d'autre part sont raccordés à des récipients de collecte séparés (36, 45) par des conduites d'aspiration séparées (19, 20, 21 ; 41).

21. Dispositif selon la revendication 20, **caractérisé en ce que** tous les moyens (16, 17, 18) destinés à aspirer et évacuer par aspiration les viscères (30) ainsi que le sang et l'eau sont reliés à une première unité de dépression (33).

22. Dispositif selon la revendication 21, **caractérisé en ce que** la première unité de dépression (33) est essentiellement constituée par une pompe à vide (34) dotée d'un filtre (35), par un cyclone (36) servant de récipient de collecte ainsi que par des conduites d'aspiration (19, 20, 21).

23. Dispositif selon l'une des revendications 20 à 22, **caractérisé en ce que** le moyen (16) destiné à aspirer et évacuer par aspiration les viscères (30) est relié en plus à une deuxième unité de dépression (42).

24. Dispositif selon la revendication 23, **caractérisé en ce que** la deuxième unité de dépression (42) est essentiellement constituée par une pompe à vide (43) dotée d'un filtre (44), par un récipient de collecte (45) ainsi que par des conduites d'aspiration (41).

25. Dispositif selon l'une des revendications 20 à 24, **caractérisé en ce que** la deuxième unité de dépression (42) génère une dépression inférieure à celle de la première unité de dépression (33).

26. Dispositif selon l'une des revendications 20 à 25, **caractérisé en ce que** la liaison entre le moyen d'aspiration et d'évacuation par aspiration des viscères, c'est-à-dire la buse d'aspiration (16), et les deux unités de dépression (33, 42) peut être connectés facultativement.

27. Dispositif selon l'une des revendications 20 à 26, **caractérisé en ce que** les conduites d'aspiration (19, 41) entre la buse d'aspiration (16) et la première unité de dépression (33) d'une part et entre la buse d'aspiration (16) et la deuxième unité de dépression (42) d'autre part sont raccordées l'une à l'autre au niveau d'un aiguillage (40).

28. Dispositif selon l'une des revendications 20 à 27, **caractérisé en ce qu'**un robinet à obturateur sphérique (37, 46) ou analogue est disposé dans chacune des conduites d'aspiration (19, 41) pour commuter entre les unités de dépression (33, 42).

29. Dispositif selon l'une des revendications 20 à 27, **caractérisé en ce qu'**un robinet à 2/3 voies est disposé dans la région de l'aiguillage (40) des conduites d'aspiration (19, 41) pour commuter entre les unités de dépression (33, 42).

30. Dispositif selon l'une des revendications 20 à 29, **caractérisé en ce qu'**un robinet à obturateur sphérique (38, 39) ou analogue est disposé dans chacune des conduites d'aspiration (20, 21) entre les moyens (17, 18) destinés à aspirer et évacuer par aspiration le sang et l'eau, c'est-à-dire les grattoirs aspirateurs et la première unité de dépression (33).

31. Dispositif selon l'une des revendications 20 à 30, **caractérisé en ce que** le récipient de collecte (45) destiné aux viscères (30) est conformé ou disposé de telle sorte que les viscères (30) rencontrent la surface d'enveloppe (47) du récipient de collecte (45) avec un dièdre α de sorte que les viscères (30) glissent ensuite doucement vers le bas sur cette surface d'enveloppe.

32. Dispositif selon l'une des revendications 20 à 31, **caractérisé en ce qu'**un moyen de séparation (54), qui peut être au choix ouvert ou fermé, est disposé à l'intérieur du récipient de collecte (45).

33. Dispositif selon l'une des revendications 20 à 32, **caractérisé en ce que** des moyens (56) destinés à détecter l'état de remplissage du récipient de collecte (45) sont disposés au niveau du récipient de collecte (45).

34. Dispositif selon l'une des revendications 20 à 33, **caractérisé en ce qu'**une bande de transport et/ou de tamisage (55) est disposée en arrière du récipient de collecte (45) par référence au sens de déplacement des viscères (30).

35. Dispositif selon l'une des revendications 20 à 34, **caractérisé en ce que** le dispositif (10) dispose d'une commande permettant de commander et/ou régler chaque composant individuel.

36. Dispositif selon l'une des revendications 20 à 35, **caractérisé en ce que** la buse d'aspiration (16) comporte une lame (25) qui est destinée à ouvrir la membrane (26) du rein et qui est conformée de façon à éviter d'endommager les viscères (30) dans la direction longitudinale.

37. Dispositif selon la revendication 36, **caractérisé en ce que** la lame (25) est dotée d'une protection (29).
